# FASCICULE DE BREVET EUROPEEN

(11) **EP 1 167 830 B1**
(45) Date de publication et mention de la délivrance du brevet: **25.02.2004**
(21) Numéro de dépôt: 01401671.1
(22) Date de dépôt: 25.06.2001
(51) Int. Cl.: F16H 59/02, F16H 61/24

(54) **Elément formant masse d'inertie pour dispositif de commande de boîte de vitesses de véhicule automobile**
Trägheitsmasse für Schaltvorrichtung eines Fahrzeuggetriebes
Inertial mass element for shifting device of a motor vehicle gear box

(30) Priorité: 26.06.2000 FR 0008163
(43) Date de publication de la demande: 02.01.2002
(73) Titulaire: BRONZE ACIOR S.A., 27750 La Couture-Boussey (FR)
(72) Inventeur: Leprat, Rémi, 27540 Ivry La Bataille (FR)
(74) Mandataire: Leszczynski, André

(56) Documents cités:
- US-A- 5 791 194

## Description

La présente invention concerne un ensemble d'inertie pour dispositif de commande de boîte de vitesses de véhicule automobile.

Pour le passage des vitesses, on utilise habituellement un dispositif de commande comportant essentiellement un levier de changement de vitesses, entraînant par l'intermédiaire d'un levier de commande l'arbre de sélection de la boîte de vitesses.

Le levier de commande transmet le mouvement du levier de changement de vitesses à l'arbre de sélection.

Afin de faciliter le passage des vitesses, il est d'usage d'ajouter un ensemble d'inertie sur l'arbre de sélection de la boîte de vitesses.

Cet ensemble d'inertie permet d'accroître la sensation de confort du conducteur lors du passage des vitesses.

Un ensemble d'inertie comporte habituellement une masselotte, une base et un bras reliant la masselotte à la base.

Différentes formes de réalisation de bras sont connues. US 5,791,194 décrit un ensemble d'inertie selon le préambule de la revendication 1.

Il a en particulier été proposé de conférer au bras une section transversale en forme de U avec des nervures de rigidification et des cavités.

L'ensemble d'inertie présente dans ce cas une structure complexe et onéreuse à fabriquer.

En outre ce type de configuration présente comme inconvénient de générer une oxydation accélérée du matériau, généralement de la fonte, dans lequel est réalisé l'ensemble d'inertie à cause de l'eau résiduelle contenue dans le fond des cavités.

Par ailleurs, un tel bras ne permet pas en général d'obtenir un mode vibratoire conforme au cahier des charges du constructeur automobile.

L'invention vise notamment à remédier aux inconvénients précités en fournissant ensemble d'inertie pour dispositif de commande de boîte de vitesses de véhicule automobile, ledit ensemble comprenant une base apte à pivoter autour d'un axe vertical, ladite base étant reliée par un bras à un corps formant masselotte, ledit bras présentant en section transversale une forme sensiblement en I.

On obtient ainsi grâce à la forme du bras un ensemble d'inertie dont la fabrication est relativement simple, ce qui en réduit le coût de revient.

Par ailleurs, la forme en I permet d'éviter la retenue de liquide, notamment d'eau, au sein du bras, de sorte que l'on évite un risque de corrosion dudit bras.

Dans une réalisation particulière, le bras comporte une paroi supérieure et une paroi inférieure sensiblement parallèles et reliées entre elles par une âme verticale perpendiculaire auxdites parois.

Avantageusement, le bras est coudé sensiblement en son milieu.

Dans une réalisation particulière, la partie du bras qui s'étend du coude au corps formant masselotte est sensiblement horizontale.

De préférence, la base comporte une première portée agencée pour permettre la fixation de l'ensemble à un carter de boîte de vitesses, à l'extérieur de ce dernier.

Ladite première portée peut comporter un alésage de passage d'un organe tel qu'une vis pour la fixation de l'ensemble au carter de la boîte de vitesses.

Avantageusement, la base comporte une seconde portée agencée pour permettre la liaison de l'ensemble à un levier du dispositif de commande de la boîte de vitesses par l'intermédiaire d'une biellette.

De préférence, l'âme du bras se prolonge sensiblement jusqu'à ladite seconde portée.

Ainsi, le maintien de la biellette sur l'ensemble d'inertie est renforcé.

Dans une réalisation particulière, la seconde portée est agencée de manière à former un palier pour une rotule de la biellette.

Avantageusement, l'axe dudit palier passe sensiblement par le coude dudit bras.

De préférence, l'élément est réalisé en fonte.

Dans une réalisation particulière, l'élément présente un mode vibratoire dans une plage de fréquences comprise entre 250 et 350 Hz.

D'autres caractéristiques et avantages de la présente invention ressortiront à la lecture de la description détaillée qui va suivre, d'un exemple de mise en oeuvre non limitatif, et à l'examen du dessin annexé, sur lequel :
- la figure 1 représente schématiquement, en perspective, un ensemble d'inertie conforme à l'invention, et
- la figure 2 représente schématiquement en coupe selon II-II l'ensemble d'inertie de la figure 1.

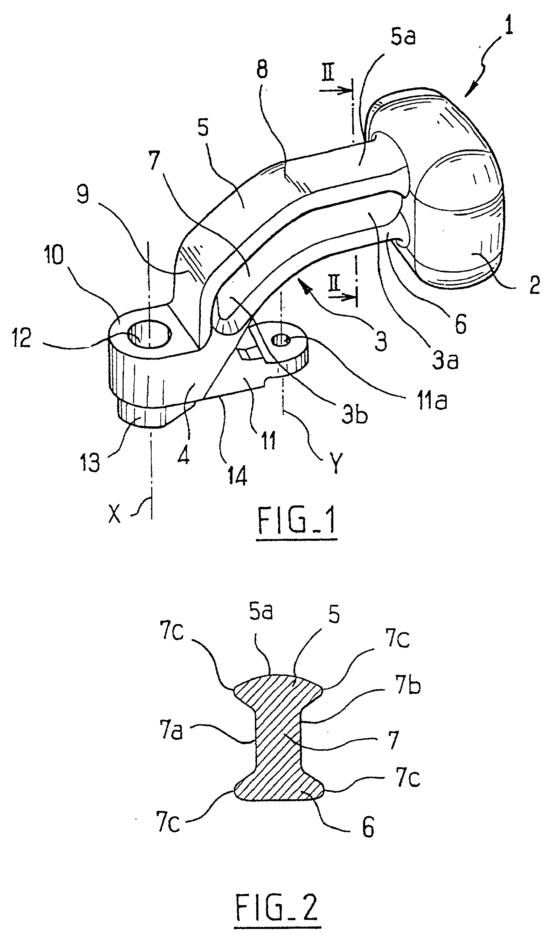

La figure 1 représente un ensemble d'inertie 1 comportant un corps formant masselotte 2 relié à une base 4 par un bras 3.

Dans l'exemple décrit, l'ensemble 1 est réalisé en fonte d'un seul tenant par moulage.

Le bras 3 comporte une paroi supérieure 5 et une paroi inférieure 6 parallèles entre elles.

La paroi supérieure 5 présente une surface extérieure 5a plane ou avantageusement convexe de manière à faciliter l'écoulement et l'évacuation de liquide autour du bras 3.

On évite ainsi toute retenue d'eau résiduelle au contact du bras 3, ce qui évite que certaines régions du bras 3 ne soient soumises à la corrosion.

Les parois 5 et 6 sont reliées entre elles par une âme 7 constituée par une paroi verticale.

L'âme 7 présente deux faces sensiblement verticales 7a et 7b situées en retrait des bords longitudinaux 7c des parois 5 et 6.

Autrement dit, comme on peut le voir sur la figure 2, le bras 3 présente en section transversale une forme générale en I.

Le bras 3 présente un coude 8 le divisant en deux parties 3a et 3b sensiblement de même longueur.

La partie 3 a du bras 3 s'étendant du coude 8 à la masselotte 2 est sensiblement horizontale en position d'utilisation de l'ensemble.

La partie 3b s'étendant du coude 8 à la base 4 est inclinée vers le bas.

La paroi supérieure 5 comprise dans la partie 3b présente un second coude 9 de sorte que la partie de la paroi 5 comprise entre le second coude 9 et la base 4 est sensiblement verticale.

La base 4 comporte deux portées 10 et 11, la première portée 10 étant reliée au bras 3 par la paroi supérieure 5 et la seconde portée 11 étant reliée au bras 3 par la paroi inférieure 6.

La portée 10 comporte un alésage 12 d'axe vertical X permettant la fixation du bras 3 sur un carter de boîte de vitesses de véhicule automobile, non représenté, à l'extérieur de ce dernier, au moyen d'une vis.

L'ensemble d'inertie 1 tourne autour de l'axe X dans des conditions précisées dans la suite.

La portée 11 est située sous le bras 3 et forme un palier pour supporter une biellette, non représentée.

La portée 11 comporte un passage 11a d'axe vertical Y pour l'engagement d'une rotule de la biellette.

Dans l'exemple décrit, l'axe Y du passage 11a passe sensiblement par le coude 8 du bras 3.

La portée 10 comporte une extension 13 s'étendant verticalement vers le bas, le taraudage 12 se prolongeant à travers cette extension 13.

L'extension 13 est en saillie de la surface inférieure 14 de la base 4 et vient en appui sur le carter.

La mise en place de l'ensemble 1 dans le dispositif de commande de boîte de vitesses est réalisée en fixant la portée 10 sur le carter de la boîte de vitesses et en reliant la portée 11 au levier de commande par l'intermédiaire d'une biellette reliée par des rotules, d'une part, à la portée 11 et, d'autre part, au levier de commande.

Lorsque la biellette est actionnée par le levier de commande, l'ensemble d'inertie 1 tourne autour de l'axe vertical X.

L'inertie de la masselotte 2 permet notamment d'entraîner l'arbre de sélection en rotation à partir d'un couple faible exercé sur le levier de commande.

Par ailleurs, la forme en I du bras 3 permet d'obtenir un mode vibratoire propre par exemple proche de 300 Hz.

Bien entendu l'exemple de mise en oeuvre qui vient d'être décrit ne présente aucun caractère limitatif et il pourra recevoir toutes modifications souhaitables sans sortir pour cela du cadre de l'invention.

## Revendications

1. Ensemble d'inertie (1) pour dispositif de commande de boîte de vitesses de véhicule automobile, comprenant une base (4) apte à pivoter autour d'un axe vertical (X), ladite base étant reliée par un bras (3) à un corps formant masselotte (2), **caractérisé par le fait que** ledit bras (3) présente en section transversale une forme sensiblement en I.

2. Ensemble d'inertie selon la revendication 1, **caractérisé par le fait que** ledit bras (3) comporte une paroi supérieure (5) et une paroi inférieure (6) sensiblement parallèles et reliées entre elles par une âme verticale (7) perpendiculaire auxdites parois (5 ; 6).

3. Ensemble d'inertie selon l'une des revendications 1 et 2, **caractérisé par le fait que** le bras (3) est coudé (en 8) sensiblement en son milieu.

4. Ensemble d'inertie selon la revendication 3, **caractérisé par le fait que** la partie du bras (3) qui s'étend du coude (8) au corps formant masselotte (2) est sensiblement horizontale en position d'utilisation.

5. Ensemble d'inertie selon l'une quelconque des revendications précédentes, **caractérisé par le fait que** la base (4) comporte une première portée (10) agencée pour permettre la fixation de l'ensemble (1) à un carter de boîte de vitesses, à l'extérieur de ce dernier.

6. Ensemble d'inertie selon la revendication 5, **caractérisé par le fait que** ladite première portée (10) comporte un alésage (12) de passage d'un organe, tel qu'une vis, pour la fixation de l'ensemble au carter de la boîte de vitesses.

7. Ensemble d'inertie selon l'une quelconque des revendications précédentes, **caractérisé par le fait que** la base comporte une seconde portée (11) agencée pour permettre la liaison de l'ensemble (1) à un levier du dispositif de commande de la boîte de vitesses par l'intermédiaire d'une biellette.

8. Ensemble d'inertie selon la revendication précédente, **caractérisé par le fait que** l'âme (7) du bras (3) se prolonge sensiblement jusqu'à ladite seconde portée (11).

9. Ensemble d'inertie selon l'une des revendications 7 et 8, **caractérisé par le fait que** la seconde portée (11) est agencée de manière à former un palier pour une rotule de la biellette.

10. Ensemble d'inertie selon les revendications 3 et 9, **caractérisé par le fait que** l'axe (Y) dudit palier (11) passe sensiblement par le coude (8) dudit bras (3).

## Patentansprüche

1. Trägheitsbaugruppe (1) für eine Schaltvorrichtung eines Kraftfahrzeuggetriebes, mit einem um eine vertikale Achse (X) schwenkbaren Sockel (4), der durch einen Arm (3) mit einem Fliehgewicht (2) verbunden ist, **dadurch gekennzeichnet, daß** der Arm (3) einen im wesentlichen 1-förmigen Querschnitt hat.

2. Trägheitsbaugruppe nach Anspruch 1, **dadurch gekennzeichnet, daß** der Arm (3) eine obere Wand (5) und eine dazu im wesentlichen parallele untere Wand (6) aufweist, die durch ein zu den genannten Wänden (5; 6) rechtwinkliges vertikales Mittelstück (7) verbunden sind.

3. Trägheitsbaugruppe nach Anspruch 1 oder 2, **dadurch gekennzeichnet, daß** der Arm (3) im wesentlichen in seiner Mitte (bei 8) gekrümmt ist.

4. Trägheitsbaugruppe nach Anspruch 3, **dadurch gekennzeichnet, daß** der Teil des Armes (3), der sich von der Krümmung (8) zum Fliehgewicht (2) erstreckt, in der Gebrauchsstellung im wesentlichen horizontal ist.

5. Trägheitsbaugruppe nach einem der vorstehenden Ansprüche, **dadurch gekennzeichnet, daß** der Sockel (4) einen ersten Lagersitz (10) aufweist, der dazu ausgebildet ist, die außenseitige Befestigung der Baugruppe (1) an einem Getriebegehäuse zu ermöglichen.

6. Trägheitsbaugruppe nach Anspruch 5, **dadurch gekennzeichnet, daß** der erste Lagersitz (10) eine Bohrung (12) für den Durchtritt eines Organs, etwa einer Schraube, zur Befestigung der Baugruppe am Getriebegehäuse aufweist.

7. Trägheitsbaugruppe nach einem der vorstehenden Ansprüche, **dadurch gekennzeichnet, daß** der Sockel einen zweiten Lagersitz (11) aufweist, der dazu ausgebildet ist, die Verbindung der Baugruppe (1) mit einem Hebel der Schaltvorrichtung des Getriebes über ein Gestänge zu ermöglichen.

8. Trägheitsbaugruppe nach dem vorstehenden Anspruch, **dadurch gekennzeichnet, daß** das Mittelstück (7) des Armes (3) im wesentlichen bis zu dem zweiten Lagersitz (11) verlängert ist.

9. Trägheitsbaugruppe nach Anspruch 7 oder 8, **dadurch gekennzeichnet, daß** der zweite Lagersitz (11) so ausgebildet ist, daß er ein Lager für ein Gelenk des Gestänges bildet.

10. Trägheitsbaugruppe nach den Ansprüchen 3 und 9, **dadurch gekennzeichnet, daß** die Achse (Y) des Lagers (11) im wesentlichen durch die Krümmung (8) des Armes (3) verläuft.

## Claims

1. Inertia assembly (1) for an automobile vehicle gearbox control device, comprising a base (4) able to pivot about a vertical axis (X), said base being linked by an arm (3) to a body forming a governor weight (2), **characterised in that** said arm (3) has an approximately I-shaped cross-section.

2. Inertia assembly according to claim 1, **characterised in that** said arm (3) comprises an upper wall (5) and a lower wall (6) approximately parallel and linked together by a vertical web (7) perpendicular to said walls (5, 6).

3. Inertia assembly according to one of claims 1 and 2, **characterised in that** the arm (3) is bent (at 8) approximately in its middle.

4. Inertia assembly according to claim 3, **characterised in that** the part of the arm (3) extending from the elbow (8) to the governor weight body (2) is approximately horizontal in the usage position.

5. Inertia assembly according to any of the previous claims, **characterised in that** the base (4) has a first bearing surface (10) arranged to allow fixing of the assembly (1) to the outside of a gearbox housing.

6. Inertia assembly according to claim 5, **characterised in that** said first bearing surface (10) comprises a bore (12) for the passage of an element such as a screw for fixing the assembly to the gearbox housing.

7. Inertia assembly according to any of the previous claims, **characterised in that** the base has a second bearing surface (11) arranged to allow the assembly (1) to be connected to a lever of the gearbox control device via a rocker bar.

8. Inertia assembly according to the previous claim, **characterised in that** the web (7) of the arm (3) extends approximately as far as the second bearing surface (11).

9. Inertia assembly according to any of claims 7 and 8, **characterised in that** the second bearing surface (11) is arranged to form a bearing for a pivot pin of the rocker bar.

10. Inertia assembly according to claims 3 and 9, **characterised in that** the axis (Y) of the said bearing (11) passes approximately through the elbow (8) of said arm (3).
